**Europäisches Patentamt**

**European Patent Office**

**Office européen des brevets**

(19)

(11) Veröffentlichungsnummer : **0 247 197 B1**

(12) **EUROPÄISCHE PATENTSCHRIFT**

(45) Veröffentlichungstag der Patentschrift :
18.03.92 Patentblatt 92/12

(51) Int. Cl.⁵ : **G01J 1/42**

(21) Anmeldenummer : 87900714.4

(22) Anmeldetag : 28.10.86

(86) Internationale Anmeldenummer :
**PCT/EP86/00618**

(87) Internationale Veröffentlichungsnummer :
**WO 87/02766 07.05.87 Gazette 87/10**

(54) **GERÄT ZUM MESSEN VON UV-STRAHLUNG.**

(30) Priorität : 05.11.85 DE 3539236

(43) Veröffentlichungstag der Anmeldung :
02.12.87 Patentblatt 87/49

(45) Bekanntmachung des Hinweises auf die
Patenterteilung :
18.03.92 Patentblatt 92/12

(84) Benannte Vertragsstaaten :
**AT BE CH DE FR GB IT LI LU NL SE**

(56) Entgegenhaltungen :
**DE-A- 3 238 840**
**FR-A- 2 545 932**
**Patent Abstracts of Japan, band 6, Nr.53 (P 109) (931), 8 April 1982; & JP A 56168116**

(73) Patentinhaber : **Kosmedico kosmetische und medizinische Lampen GmbH**
**Kölner Strasse 8**
**W-7000 Stuttgart 50 (DE)**

(72) Erfinder : **DÜBGEN, Oswald**
**Pfadäckerstr. 17**
**W-7000 Stuttgart 50 (DE)**

(74) Vertreter : **Dreiss, Hosenthien & Fuhlendorf**
**Gerokstrasse 6**
**W-7000 Stuttgart 1 (DE)**

## Beschreibung

Die vorliegende Erfindung bezieht sich auf ein Handgerät zum Messen von Strahlung, insbesondere von UV-Strahlung, nach dem Oberbegriff des Anspruchs 1.

Bei einem derarigen Handgerät zum Messen von Strahlung, insbesondere UV-Strahlung, wie es durch die DE-A-3 238 840 bekannt geworden ist, sind auf einer großflächigen Gehäuseseite sowohl das Strahlungsfilter mit der dahinterliegenden Sensoreinheit als auch die Anzeigeeinheit, die als Zeigerinstrument ausgebildet ist, angeordnet.

Ein anderes ähnliches Handgerät zum Messen von Strahlung, insbesondere UV-Strahlung ist ferner aus der FR-A-2 545 932 bekannt geworden. Bei diesem Handgerät ist ein rundes Gehäuse nach Art eines Uhrengehäuses vorgesehen, dessen eine Kreisfläche mit dem Sensor in der Mitte und mit einem Zeigerinstrument in einem Halbkreis um den Sensor versehen ist.

In beiden Fällen kann dieses Handgerät dann in bequemer Weise zum Messen von Strahlung verwendet werden, wenn es bspw. horizontal in der Hand gehalten wird, so daß der Sensor von bspw. der Sonnenstrahlung oder der Strahlung eines Besonnungsgerätes voll erfaßt werden kann, und das Zeigermeßinstrument dem Benutzer zugewandt ist. Schon das Messen von UV-Strahlung unmittelbar an der Austrittsfläche des Deckenteils eines Besonnungsgerätes ist praktisch dann nicht möglich, wenn die Strahlungsintensität in einem geringen Abstand von dieser Strahlungsaustrittsfläche gemessen werden soll, da dann eine Sicht auf das Zeigermeßinstrument nur möglich ist, wenn das Handgerät schräg gehalten wird. Dies bedeutet aber Parallaxenfehler beim Ablesen. Will man die UV-Strahlung des Bankteils eines Besonnungsgerätes messen, so kann dies zwar in umständlicher Weise in einem Abstand davon, der größer ist als der Kopf des Benutzers dick ist, möglich sein, jedoch dann nicht mehr, da das Zeigerinstrument nicht mehr eingesehen werden kann. Auch hier ist die einzige Möglichkeit, erhebliche Ablesefehler in Kauf zu nehmen.

Aus der JP-A-56-168 116 ist es bei Videorecordern bekannt, die Segmentanzeige für die Zeit dann umzukehren, wenn der Videorecorder aus einer vertikalen in eine horizontale Lage gebracht wird. Die Frage der Anbringung verschiedener Bauteile an unterschiedlichen Orten stellt sich hier nicht.

Aufgabe der vorliegenden Erfindung ist es, ein Handgerät zum Messen von Strahlung, insbesondere UV-Strahlung der eingangs genannten Art zu schaffen, bei dem die Anzeigeeinheit in jeder Meßlage in einfacher und genauer Weise abgelesen werden kann.

Zur Lösung dieser Aufgabe sind bei einem Handgerät der genannten Art die im Anspruch 1 angegebenen Merkmale vorgesehen.

In vorteilhafter Weise ist die Anzeigeeinheit in jeder Lage des Handgerätes normal ablesbar, also sowohl dann, wenn das Handgerät senkrecht nach oben zur Messung von aus einem Deckengerät oder einem Deckenteil eines Besonnungsgerätes austretenden Strahlung verwendet wird, als auch dann, wenn das Handgerät senkrecht nach unten gehalten wird, um die aus einem Bauteil eines Besonnungsgerätes austretende Strahlung zu messen. Gleiches gilt für die Messung aufrecht stehender Besonnungsgeräte. Dies ist möglich, weil der lageabhängige Schalter es ermöglicht, daß bei einem sozusagen "Auf-den-Kopf-stellen" des Gerätes auch die Anzeigeeinheit derart umgesteuert wird, daß sie ausgehend von der ursprünglichen Lage die Schrift ebenfalls auf den Kopf stellt und von rechts nach links schreibt, so daß in dieser Kopflage des Gerätes die Anzeigeeinheit wiederum normal abgelesen werden kann. Außerdem ist bei der Strahlungsmessung eine Abschattung des Sensors beim Ablesen der Anzeigeeinheit in jedem Falle vermieden und es kann in bequemer Weise eine Messung unmittelbar an der Strahlungsaustrittsfläche eines UV-Gerätes oder dgl. durchgeführt werden.

Gemäß einem bevorzugten Ausführungsbeispiel vorliegender Erfindung sind die Merkmale nach Anspruch 2 vorgesehen. Dies ist eine mit relativ wenigem Aufwand aufzubauende Anordnung zum Erreichen des erfindungsgemäßen Zwecks.

In besonders vorteilhafter Weise wird gemäß Anspruch 3 bei der Ansteuerschaltung ein Baustein verwendet, der es im Zusammenhang mit einem Taster ermöglicht, die momentane Anzeige jeweils bis zur nächsten Messung zu speichern.

Weitere Einzelheiten und Ausgestaltungen der Erfindung sind der folgenden Beschreibung zu entnehmen, In der die Erfindung anhand des in der Zeichnung dargestellten Ausführungsbeispieles näher beschrieben und erläutert ist. Es zeigt:

Figur 1 ein Blockschaltbild zur Darstellung der Meßschaltung eines Handgerätes zum Messen von UVA-Strahlung gemäß einem bevorzugten Ausführungsbeispiel vorliegender Erfindung,

Figur 2 in schematischer Draufsicht die Anordnung einzelner Bauelemente eines Handgerätes zum Messen von UVA-Strahlung,

Figur 3 in perspektivischer, teilweise aufgebrochener Darstellung ein Handgerät zum Messen von UVA-Strahlung nach Fig. 2, und

2

Figur 4 in schematischer, Darstellung eine Schaltung zur Ansteuerung der Anzeigeeinheit.

Das erfindungsgemäße Strahlungs-Meßgerät 10 ist gemäß dem dargestellten Ausführungsbeispiel als Handgerät ausgebildet und dient zum Messen von UV-Strahlung, insbesondere von UVA-Strahlung, d.h. im DIN-Bereich von 315 bis 400 nm.

Das Meßgerät 10 besitzt eine Sensoreinheit 11, die der zu messenden UVA-Strahlung ausgesetzt wird bzw. die diese aufnimmt. Die Sensoreinheit 11 besteht aus einem Sensor 12 bspw. in Form einer im UV- bzw. UVA-Bereich empfindlichen Fotozelle und einem vorgeschalteten Filter 13 zum Ausfiltern und Durchlassen der genannten UVA-Strahlung. Die Sensoreinheit 11 ist mit einem Signalverarbeitungsteil 16 verbunden, an den eine digitale Anzeigeeinheit 21 angekoppelt ist. Das Signalverarbeitungsteil 16 weist einen Signalwandler 17, der das vom Sensor 12 kommende Meßsignal zur weiteren Verarbeitung umwandelt, eine Anzeigenansteuerung 18, die mit einer Speichertaste 22 verbunden ist, und eine umschaltbare Kodierschaltung 19 auf, die von einem Lageerkennungsteil 23 angesteuert ist. Die Anzeigeeinheit 21 kann durch Segment-Bausteine oder Matrix-Bausteine, die in beliebiger Matrixanordnung ausgebildet sein können, gebildet sein. Beim Ausführungsbeispiel besteht die digitale Anzeigeeinheit 21 aus einer Vielzahl von 7-Segment-Anzeigebausteinen.

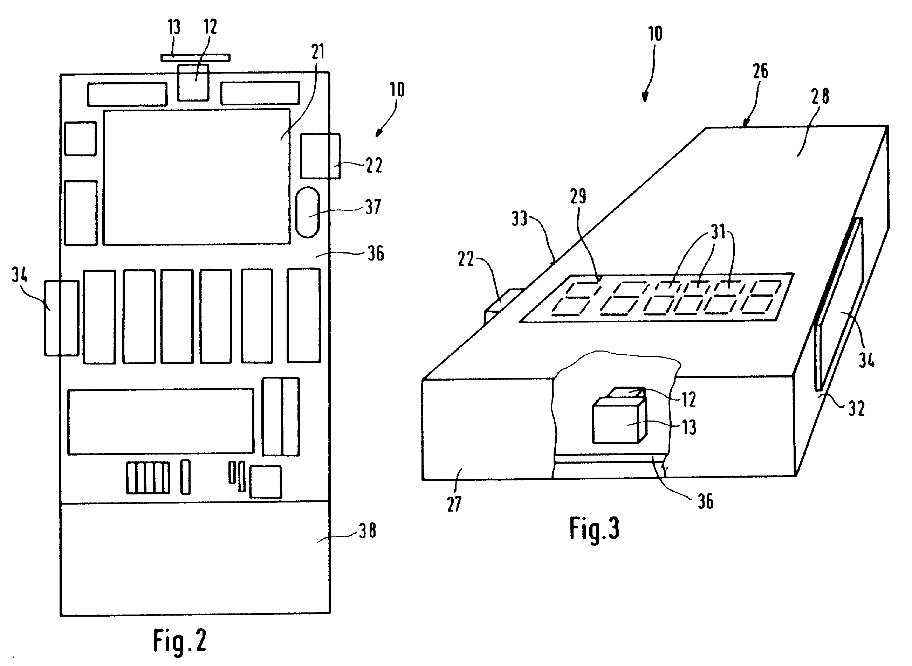

In den Figuren 2 und 3 ist das Handmeßgerät 10 in Draufsicht bzw. in perspektivischer Ansicht jeweils schematisch dargestellt, um zu zeigen, wo die für die Erfindung wesentlichen Bauteile angeordnet sind. Das Handmeßgerät besitzt ein etwa quaderförmiges Gehäuse 26, an dessen einer schmaler Stirnseite 27 die Sensoreinheit 11 in Form des Sensors 12 mit vorgeschaltetem Filter 13 angeordnet und befestigt ist. In einer großflächigen und zur vorderen Stirnseite 27 senkrechten Gehäuseoberseite 28 ist eine Aussparung 29 vorgesehen, in bzw. hinter welcher die Vielzahl der nebeneinander angeordneten 7-Segment-Bausteine 31 der Anzeigeeinheit 21 gehalten sind. An jeder der langestrecken Schmalseiten 32, 33 des Gehäuses 26 ist durch einen Durchbruch vorragend ein Hauptschalter 34 für das Meßgerät 10 bzw. die Speichertaste 22 angeordnet.

Unterhalb der Anzeigeeinheit 21 befindet sich eine Leiterplatte 36, die sich über einen wesentlichen Teil der Grundfläche des Gehäuses 26 erstreckt und die die Verdrahtung der einzelnen elektrischen Bauelemente, von denen im einzelnen nur einige wenige oben genannt und weiter unten erwähnt werden, beinhaltet. Auf der Leiterplatte 36 ist ferner ein lageabhängiger Schalter 37 des Lageerkennungsteils 23 gehalten. Der lageabhängige Schalter 37 ist bspw. ein Quecksilberschalter und dient dazu, zwei verschiedene die Lagen des Meßgerätes 10 sozusagen zu erkennen, d.h. ob sich das Meßgerät 10 bzw. das Gehäuse 26 entweder in einer mit der Sensoreinheit 11 nach oben weisenden geneigten bzw. vertikalen Lage oder in einer mit der Sensoreinheit 11 nach unten weisenden geneigten bzw. vertikalen Lage befindet. In einem hinteren Bereich des Gehäuses 26 befindet sich außerdem ein Batteriefach 38 für Batterien als Energiequelle des Meßgerätes 10.

Wird das erfindungsgemäße Meßgerät 10 zur Messung einer UVA-Strahlung in einer derartigen vertikalen Lage gehalten, daß die Sensoreinheit 11 nach oben zeigt, um bspw. die UVA-Strahlung eines Solariumdeckengerätes oder des Oberteils eines kombinierten Solariumgerätes zu messen, so hält der Bedienende das Meßgerät 10 derart, daß die Gehäuseoberseite 28 mit der Anzeigeeinheit 21 sichtbar ist. Die 7-Segment-Bausteine 31 der Anzeigeeinheit 21 geben damit eine in üblicher Weise lesbare Anzeige, die von links nach rechts lesbar geschrieben ist. Gleiches gilt, wenn die UVA-Strahlung eines senkrecht stehenden Solariumgerätes gemessen werden sollen, bei welcher Messung das Meßgerät 10 horizontal gehalten wird, wobei die Sensoreinheit 11 vom Bedienenden weg gerichtet ist. Der Bedienende kann dabei in gleicher Weise wie vorstehend beschrieben, die Anzeigeeinheit 21 bzw. deren 7-Segment-Bausteine 31 in üblicher Weise ablesen.

Soll dagegen die UVA-Strahlung einer einzelnen Solariumliege oder der Liege eines kombinierten Solariumgerätes gemessen werden, so muß das Meßgerät 10 mit der Sensoreinheit 11 senkrecht nach unten gerichtet gehalten werden, wobei ebenfalls die Gehäuseoberseite 28 mit der Anzeigeeinheit 21 zum Bedienenden gerichtet angeordnet ist. In dieser nun sozusagen auf dem Kopf stehenden vertikalen Lage des Meßgerätes 10 wird durch die andere Lage des lageabhängigen Schalters 37 die Kodierschaltung 19 umgeschaltet, so daß diese bewirkt, daß die Anzeigeeinheit 21 bzw. die 7-Segment-Bausteine 31 nicht auf dem Kopf stehend sondern in normaler Lage abgelesen werden können. Mit anderen Worten auch in dieser Lage des Meßgerätes 10 sind die Ziffern in Normallage und die Anzeige von links nach rechts lesbar angegeben.

Figur 4 zeigt eine Schaltungsanordnung der umschaltbaren Kodierschaltung 19, wie sie zwischen der Anzeigenansteuerung 18 und der digitalen Anzeigeeinheit 21 angeordnet bzw. geschaltet ist. Es sei dabei betont, daß in Fig. 4 die Anzeigeeinheit 21 der Einfachheit halber nur mit vier 7-Segment-Bausteinen 31 versehen ist, während in Fig. 3 beispielhaft sechs derartige bausteine 31 dargestellt sind. Die umschaltbare Kodierschaltung 19, die in Form einer Matrixschaltung aufgebaut ist, besitzt Eingänge A1...G1 bis A4....G4, die jedem der Segmente der vier 7-Segment-Bausteine 31 zugeordnet sind und die mit der Anzeigenansteuerung 18 verbunden sind, welche auch die Wertigkeit der Bausteine 1 bis 4 für die Anzeige vorgibt. Der Übersichtlichkeit wegen sind nur bspw. die Eingänge A1 und D4 des Segmentes a des ersten Bausteins 31 bzw. des Segementes d des vierten Bausteins 31 dargestellt. Entsprechendes gilt für die Ausgänge a1...g1 bis a4....g4, die mit den einzelnen Segementen a...g jedes der vier Bausteine 31 verbunden sind.

Die Verbindung der Eingänge mit den Ausgängen der Matrixschaltung 19 ist folgendermaßen ausgeführt: Jeder Eingang A1, D4 (entsprechendes gilt für die anderen) ist über ein eigenes logisches Gatter bspw. ein Tri-State Treiber 41 mit seinem zugehörigen Ausgang a1 bzw. d4 verbunden. Außerdem ist jeder Eingange A1, D4 über ein eigenes zweites logisches Gatter, bspw. ein Tri-State-Treiber 42 mit demjenigen Ausgang verbunden, der mit demjenigen Segment eines Bausteins 31 verbunden ist, das zux dem erwähnten Eingang zugeordneten Segment innerhalb der Anzeigeeinheit 21 punktsymmetrisch ist. Dies gilt gemäß Fig. 4 für das Segment a des ersten Bausteins 31 und Segment d des vierten Bausteins 31, wie dies auch aus der Schaltungsanordnung ersichtlich ist. Da bei dieser Anzahl der 7-Segment-Bausteine gilt, daß der erste Baustein (1) und der vierte Baustein (4) zueinander punktsymmetrisch sind, gilt auch innerhalb dieser Bausteine, daß die Segmente b und e, die Segmente c und f zueinander und die Segmente g in sich punktsymmetrisch sind. Entsprechendes gilt für die zweiten und dritten Bausteine (2) bzw. (3). Es ist also der Eingang A1 über ein erstes Gatter 41 mit dem Ausgang a1 und über ein erstes Gatter 43 mit dem Ausgang d4 verbunden. Entsprechends gilt für den Eingang D4 der über ein (25-tes) Gatter 41 mit dem Ausgang d4 und über ein (25-tes) Gatter 42 mit dem Ausgang a1 verbunden ist. Wie leicht vorstellbar, sind alle weiteren Ein- und Ausgänge mit entsprechenden Gatteranordnungen versehen bzw. untereinander verbunden. Alle Gatter 41 sind mit ihrem weiteren Eingang miteinander verbunden und zu einer Klemme 43 geführt, während alle Gatter 42 ebenfalls mit ihrem weiteren Eingang miteinander verbunden und zu einer Klemme 44 geführt sind. Diese beiden Klemmen 43 und 44 sind mit dem lageabhängigen Schalter 37 des Lageerkennungsteils 23 verbunden.

Ist also das Meßgerät 10 in derjenigen schrägen oder vertikalen Lage, in der die Sensoreinheit 11 nach oben weist, ist der lageabhängige Schalter 37 in einer Lage, in der auf die Klemme 43 und damit auf die UND-Gatter 41 ein Impuls gebracht wird, so daß bei Anstehen eines Impulses an den Eingängen (A1, D4) die Gatter 41 durchgeschaltet sind, so daß auch an den Ausgängen (a1, d4) ein Impuls für die betreffenden Segmente (a, d) der betreffenden Bausteine ((1), (4)) anliegt. In diesem Falle wird, wenn weitere Segmente der 7-Segement-Bausteine 31 angesteuert sind, eine Anzeige erscheinen, die in der in Fig. 4 dargestellten senkrechten Lage des Meßgerätes 10 lesbar ist. Ist dagegen das Meßgerät 10 in einer derartigen schrägen oder vertikalen Lage, daß der lageabhängige Schalter 37 umschaltet, so daß an der Klemme 44 ein Impuls ansteht, dann werden die Gatter 42 durchgeschaltet, so daß der Impuls am Eingang A1 auf den Ausgang d4 und der Impuls am Eingang D4 zum Ausgang a1 geführt wird. Erfolgt dies in entsprechender Weise bei den anderen der 7-Segment-Bausteine 31, so ergibt sich eine Anzeige, die in dieser Lage des Meßgerätes 10 gelesen werden kann, d.h. also im Bezug auf Fig. 4 eine Anzeige, die dann gelesen werden kann, wenn man die Fig. 4 auf den Kopf stellt (dies wurde durch "Auf-den-Kopf-stellen" der entsprechenden alphanumerischen Zeichen verdeutlicht). Daraus ist ohne weiteres ersichtlich, welche der Bausteine 31 und welche der Segmente a ... g innerhalb dieser Bausteine miteinander vertauscht werden. Dadurch ergibt sich eine punktsymmetrische Anordnung und die Möglichkeit, die 7-Segment-Bausteine 31 bzw. die Anzeigeeinheit 21 in "Normallage" und "Kopflage" abzulesen.

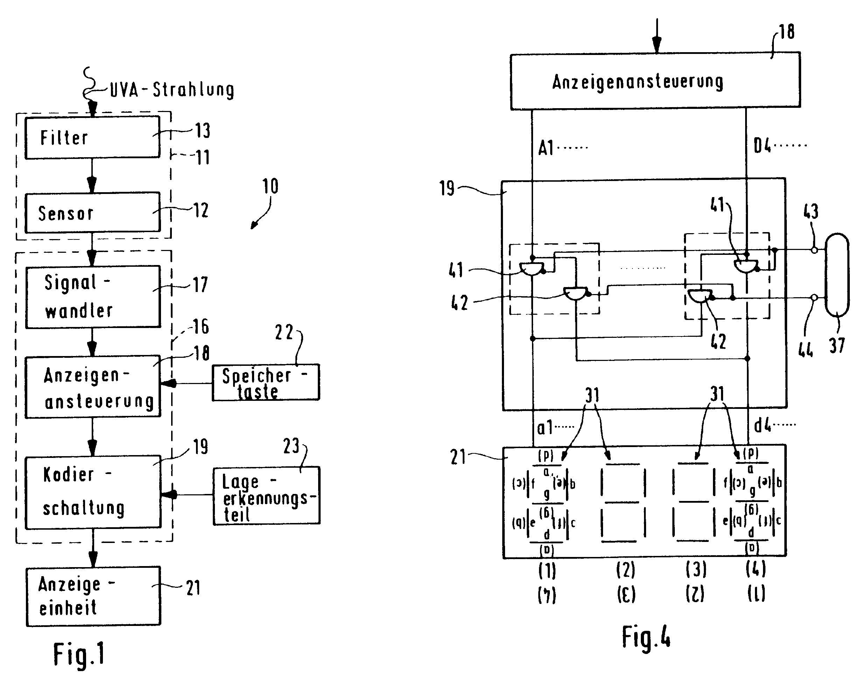

Aus den Fig. 1 und 3 ist ferner die sog. Speichertaste 22 ersichtlich, die in Verbindung mit dem als elektronischer Baustein ausgebildeten Anzeigesteuerung 18 bewirkt, daß durch Drücken der Speichertaste 22 eine Anzeige auf der Anzeigeeinheit 21 geschrieben wird und nach Loslassen der Speichertaste 22 solange sichtbar bleibt, bis für eine nächste Messung die Speichertaste 22 erneut betätigt wird.

## Patentansprüche

1. Handgerät (10) zum Messen von Strahlung, insbesondere UV-Strahlung, mit einem etwa quaderförmigen Gehäuse (26), in dem eine, ggf. ein Strahlungsfilter (13) beinhaltende, Sensoreinheit (11) und ein Signalverarbeitungsteil (16) zwischen der Sensoreinheit (11) und einer Anzeigeeinheit (21) gemeinsam untergebracht sind, **dadurch gekennzeichnet**, daß im Gehäuse (26) ein lageabhängiger Schalter (37) zusammen mit einer umschaltbaren Kodierschaltung (19) vorgesehen sind, durch die die digital ausgebildete Anzeigeeinheit (21) derart umsteuerbar ist, daß sie in einer zu ihrer Ebene um 180° gedrehten Lage lesbar ist, und daß an einer kleinflächigen Stirnseite (27) des Gehäuses (26) die Sensoreinheit (11) und an einer dazu senkrechten großflächigen Längsseite (28) des Gehäuses (26) die digitale Anzeigeeinheit (21) angeordnet ist.

2. Handgerät nach Anspruch 1, dadurch gekennzeichnet, daß die umschaltbare Kodierschaltung (19) durch eine logische Matrixschaltung gebildet ist, deren mit einer Ansteuerschaltung (18) für die als vorzugsweise 7-Segment-Anzeige ausgebildete digitale Anzeigeeinheit (21) verbundenen Eingänge jeweils über je einen logischen Baustein (41,42) mit zwei in den vorzugsweise mehreren 7-Segment-Bausteinen (31) der Anzeigeeinheit (21) zueinander punktsymmetrisch angeordneten Anzeigesegmenten (31) verbunden sind, und daß die logischen Bausteine (41,42) gruppenweise vom lageabhängigen Schalter (37) angesteuert sind.

3. Handgerät nach Anspruch 2, dadurch gekennzeichnet, daß die Ansteuerschaltung (18) mit einem Taster (22) zum Halten der momentanen Anzeige verbunden ist.

## Claims

1. A hand device (10) for measuring radiation, in particular UV-radiation, comprising a substantially parallelepipedic housing (26) in which there are jointly disposed a sensor unit (11) which possibly contains a radiation filter (13), and a signal processing portion (16) between the sensor unit (11) and a display unit (21), characterised in that provided in the housing (26) are a position-dependent switch (37) together with a coding circuit (19) which can be switched over and by means of which the digital display unit (21) can be changed over in such a way that it can be read in a position which is turned through 180° relative to its plane, and the sensor unit (11) is arranged at an end (27) of small area of the housing (26) and the digital display unit (21) is arranged at a longitudinal side (28) of the housing (26), which is of large area and which is perpendicular to the end.

2. A hand device according to claim 1 characterised in that the switchable coding circuit (19) is formed by a logic matrix circuit whose inputs which are connected to an actuating circuit (18) for the digital display unit (21) which is preferably in the form of a 7 -segment display are each connected by way of a respective logic component (41, 42) to two display segments (31) which are arranged in point symmetry relative to each other in the preferably plural 7 -segment components (31) of the display unit (21), and that the logic components (41, 42) are actuated in a group-wise manner by the position-dependent switch (37).

3. A hand device according to claim 2 characterised in that the actuating circuit (18) is connected to a key (22) for holding the instantaneous display.

## Revendications

1. Appareil portatif (10) pour mesurer des radiations, en particulier les radiations UV, comprenant un boîtier (26) de forme à peu près parallélépipédique, dans lequel sont logées ensemble une unité de captage (11) renfermant éventuellement un filtre de radiations (13), ainsi que, entre l'unité de captage (11) et une unité d'affichage (21), une partie (16) de traitement de signaux, caractérisé en ce qu'un commutateur (37) sensible à l'orientation est prévu ensemble avec un circuit de codage (19) commutable dans le boîtier (26), par lesquels l'unité d'affichage (21), de type numérique, peut être commutée de manière qu'elle soit lisible dans une position tournée de 180° dans son plan, et que l'unité de captage (11) est disposée sur un côté d'extrémité (27) de petite surface du boîtier (26) et l'unité d'affichage numérique (21) est disposée sur un côté longitudinal (28) de grande surface du boîtier (26), côté longitudinal qui est perpendiculaire audit côté d'extrémité.

2. Appareil portatif selon la revendication 1, caractérisé en ce que le circuit de codage commutable (19) est formé par un circuit matriciel logique dont les entrées, reliées à un circuit de commande (18) pour l'unité d'affichage numérique (21), constituée de préférence par un affichage à 7 segments, sont connectées chacune à travers un composant logique (41, 42) à deux segments d'affichage disposés à symétrie ponctuelle l'un par rapport à l'autre dans les compsans (31) à 7 segments de l'unité d'affichage (21), composants qui sont de préférence au nombre de plusieurs, et que les composants logiques (41, 42) sont pilotés par groupes par le commutateur (37) sensible à l'orientation.

3. Appareil portatif selon la revendication 2, caractérisé en ce que le circuit de commande (18) est relié à une touche (22) pour le maintien de l'affichage instantané.

Anzeigenansteuerung

18

19

41
42

41
42

43
44

37

D4

A1

d4

a1

31

31

21

Fig. 4

UVA-Strahlung

Filter
13
11

Sensor
12

Signal-wandler
17
16

Anzeigen-ansteuerung
18

Kodier-schaltung
19

Anzeige-einheit
21

Speicher-taste
22

Lage-erkennungs-teil
23

10

Fig. 1

Fig.3

Fig.2

7